# EUROPEAN PATENT SPECIFICATION

(11) **EP 3 098 084 B1**
(45) Date of publication and mention of the grant of the patent: **24.02.2021**
(21) Application number: 15739867.8
(22) Date of filing: 19.01.2015
(51) Int. Cl.: B41J 29/38, G06F 3/12, G06F 11/00, H04N 1/00, G06F 9/445

(54) **IMAGE FORMATION DEVICE**
BILDERZEUGUNGSVORRICHTUNG
DISPOSITIF DE FORMATION D'IMAGES

(30) Priority: 24.01.2014 JP 2014011595
(43) Date of publication of application: 30.11.2016
(73) Proprietor: Kyocera Document Solutions Inc., Osaka-shi, Osaka 540-8585 (JP)
(72) Inventor: MINAMINO Koji, Osaka-shi Osaka 540-8585 (JP)
(74) Representative: Beetz & Partner mbB
(86) International application number: PCT/JP2015/051169
(87) International publication number: WO 2015/111528

(56) References cited:
- JP-A- 2003 167 742
- JP-A- 2003 186 690
- JP-A- 2004 118 586
- JP-A- 2004 287 877
- JP-A- 2005 196 402
- JP-A- 2005 196 402
- JP-A- 2006 072 762
- JP-A- 2008 003 953
- JP-A- 2014 099 083
- JP-A- 2015 001 814
- US-A1- 2005 141 025
- US-A1- 2007 253 723
- US-A1- 2009 195 821
- US-A1- 2011 105 029

## Description

### Technical Field

The present invention relates to an image forming apparatus to which an optional device can be attached.

### Background Art

Some image forming apparatuses cause optional devices, such as a document transport device, a sheet feed device, and a post-processing device, to be attached to them. In such image forming apparatuses, main-unit firmware is stored in a main controller, and based on the main-unit firmware, the entire image forming apparatus including optional devices is controlled. On the other hand, option firmware is stored in an option controller in each optional device. In response to instructions from the main controller, the option controller operates the corresponding optional device based on the option firmware.

When the firmware of an image forming apparatus undergoes bug correction and the like, it is updated from an old version to a new version. To enable rewriting of the existing firmware with a new version, for example, firmware for rewriting (hereinafter "rewriting firmware") is stored on a predetermined server. In that case, the rewriting firmware can be downloaded from the predetermined server to the image forming apparatus via a network, and the existing firmware can be rewritten with the new version (see, e.g., Patent Document 1 identified below). Further prior art is known from JP 2005-196402.

### List of Citations

### Patent Literature

Patent Document 1: Japanese Patent Application Publication No. 2004-110396

### Summary of the Invention

### Technical Problem

Suppose an occasion where main-unit firmware and option firmware are updated simultaneously. In that case, if only the main-unit firmware is rewritten with the new version, an optional device attached to the image forming apparatus may not operate properly. To avoid the nuisance, on an occasion where main-unit firmware and option firmware are updated simultaneously, both the main-unit firmware and the option firmware need to be rewritten with the new version.

Here, in a case where an optional device is attached to the image forming apparatus, when a rewriting mode is started to rewrite the firmware of the image forming apparatus with the new version, the main controller downloads both main-unit rewriting firmware for rewriting the main-unit firmware with the new version and option rewriting firmware for rewriting the option firmware with the new version. The main controller then, on the basis of the downloaded rewriting firmware, performs a rewriting process for rewriting the main-unit firmware with the new version and makes the option controller perform a rewriting process for rewriting the option firmware with the new version.

On the other hand, when no optional device is attached to the image forming apparatus, no rewriting process for option firmware can be performed. Accordingly, when the rewriting mode is started with no optional device attached to the image forming apparatus, the main controller typically downloads main-unit rewriting firmware but does not download option rewriting firmware . Thus, when an optional device is attached to the image forming apparatus later, an operation to start the rewriting mode (an operation to connect the image forming apparatus to a network to enable it to download option rewriting firmware ) needs to be performed again. This is troublesome to the operator.

Devised to provide a solution to the inconveniences discussed above, the present invention aims to provide an image forming apparatus that helps reduce the work that an operator who attaches a post-processing device as an optional device has to do.

### Means for Solving the Problem

To achieve the above aim, according to the present invention, an image forming apparatus to which a post-processing device as an optional device can be attached includes: a main-unit storage for storing main-unit firmware for overall control of the image forming apparatus, the main-unit storage also storing, even when the optional device is not attached to the image forming apparatus, rewriting firmware for rewriting, with firmware corresponding to the version of the main-unit firmware, option firmware which is firmware for operating the optional device and which is stored in the optional device; an interface for communication with the optional device when the optional device is attached to the image forming apparatus; and an updater for rewriting the main-unit firmware with latest-version firmware to store the rewritten main-unit firmware in the main-unit storage, the updater, on an occasion of rewriting the main-unit firmware, storing the rewriting firmware in the main-unit storage, transmitting the rewriting firmware stored in the main-unit storage via the interface to the optional device attached to the image forming apparatus, and making the optional device perform a rewriting process to rewrite the option firmware with firmware corresponding to the version of the main-unit firmware.

With a configuration according to the present invention, when both main-unit firmware and option firmware need to be rewritten, even if no optional device is attached to the image forming apparatus, option rewriting firmware can be downloaded and stored in the main-unit storage. Thus, when an optional device is attached to the image forming apparatus later, if the version of the option firmware does not correspond to the main-unit firmware, the option firmware can be rewritten on the basis of the option rewriting firmware that is already stored in the main-unit storage. Thus, an operator who attaches the optional device does not need to establish an environment for the downloading of option rewriting firmware . This helps reduce the work that the operator has to do when attaching an optional device.

Moreover, for example, when a new-model image forming apparatus that causes an earlier-shipped optional device to be attached to it is shipped, unless the option firmware of the earlier-shipped optional device is rewritten, the earlier-shipped optional device may not operate properly. In such a case, with a configuration according to the present invention, when the new-model image forming apparatus is shipped, rewriting firmware with which to rewrite the option firmware of the earlier-shipped optional device can be stored in the main-unit storage of the new-model image forming apparatus. This helps reduce the work that has to be done when the earlier-shipped optional device is attached to the new-model image forming apparatus.

### Advantageous Effects of the Invention

According to the present invention, it is possible to reduce the work that an operator has to do when attaching a post-processing device as an optional device.

### Brief Description of Drawings

[Fig. 1] is a schematic diagram showing an example of a multifunction peripheral (with optional devices) according to one embodiment of the present invention;
[Fig. 2] is a block diagram showing an example of a hardware configuration of a multifunction peripheral (with optional devices) according to one embodiment of the present invention;
[Fig. 3] is a diagram illustrating a rewriting process performed in a multifunction peripheral according to one embodiment of the present invention;
[Fig. 4] is a diagram illustrating a rewriting process performed in a multifunction peripheral according to one embodiment of the present invention;
[Fig. 5] is a flow chart illustrating a flow of control for a rewriting process performed in a multifunction peripheral according to one embodiment of the present invention; and
[Fig. 6] is a flow chart illustrating a flow of control for a rewriting process performed in a multifunction peripheral according to one embodiment of the present invention.

### Description of Embodiments

An image forming apparatus according to one embodiment of the present invention will be described below. The following description deals with, as an example, a multifunction peripheral incorporating copying, scanning, printing, and other functions. The optional devices which are not post-processing devices are not according to the invention and are present for illustration purposes only.

### <Overall Construction of a Multifunction Peripheral>

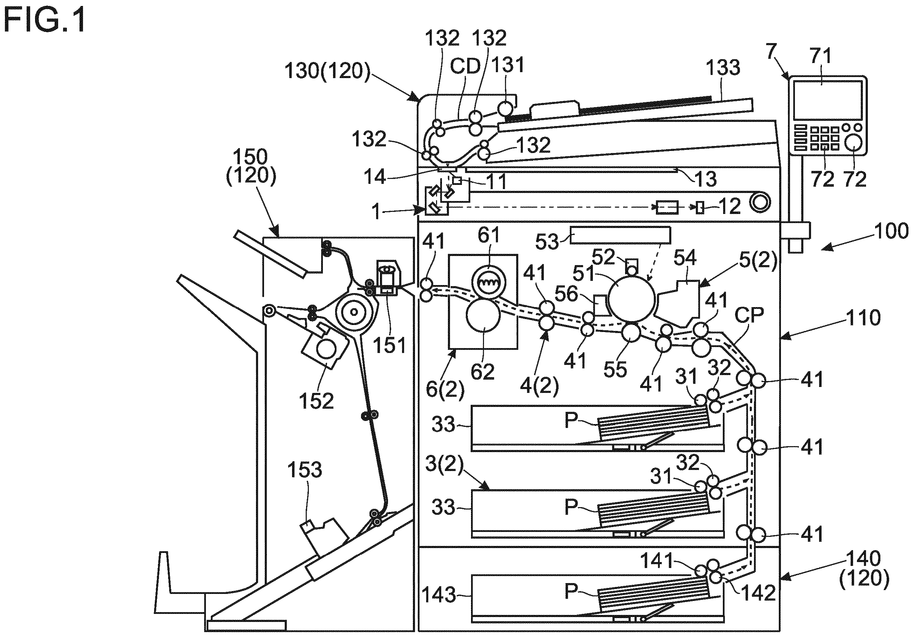

As shown in Fig. 1, a multifunction peripheral 100 (corresponding to an "image forming apparatus" according to the present invention) is provided with, in an apparatus main unit 110, an image reading section 1 and a printing section 2.

The image reading section 1 includes a lamp 11 and an image sensor 12. The image reading section 1 applies light to a document placed on a stationary-reading contact glass 13, and photoelectrically converts the light reflected from the document to produce image data of the document. Incidentally, when a document transport device 130 (an optional device 120), which will be described later, is attached to the image forming apparatus 100, a document can be automatically transported to a reading position in the image reading section 1. In that case, a predetermined position on a transport-reading contact glass 14 is the reading position in the image reading section 1.

The printing section 2 is composed of a main-unit sheet feed section 3, a sheet transport section 4, an image formation section 5, and a fixing section 6. The printing section 2 transports a sheet P, and prints an image based on image data (e.g., the image data of a document read by the image reading section 1) on the sheet P.

The main-unit sheet feed section 3 includes a pickup roller 31 and a sheet feed roller pair 32, and feeds sheets P stored in a sheet cassette 33 to a sheet transport passage CP. The sheet transport section 4 includes a plurality of transport roller pairs 41, and transports sheets P along the sheet transport passage CP.

The image formation section 5 includes a photosensitive drum 51, a charging device 52, an exposing device 53, a developing device 54, a transfer roller 55, and a cleaning device 56. The image formation section 5 forms a toner image based on image data, and transfers the toner image to a sheet P. The fixing section 6 includes a heating roller 61 and a pressing roller 62, and applies heat and pressure to the toner image transferred to the sheet P to fix it.

The multifunction peripheral 100 is provided with an operation panel 7. The operation panel 7 includes a liquid crystal display panel 71 fitted with a touch screen. The liquid crystal display panel 71 displays software keys for accepting various settings, messages, etc. The operation panel 7 is also provided with hardware keys 72 such as a numeric keypad and a Start key.

Here, an optional device 120 can be attached to the multifunction peripheral 100. Optional devices 120 that can be attached to the multifunction peripheral 100 include a document transport device 130, a sheet feed device 140, and a post-processing device 150. Fig. 1 shows one example where, as optional devices 120, a document transport device 130, a sheet feed device 140, and a post-processing device 150 are attached to the multifunction peripheral 100.

The document transport device 130 is attached to the top of the apparatus main unit 110 (image reading section 1). The document transport device 130 includes a sheet feed roller 131 and a transport roller pair 132. The document transport device 130 feeds a document placed on a document placement tray 133 to a document transport passage CD, and automatically transports the document to a predetermined position on the transport-reading contact glass 14.

The sheet feed device 140 is attached to the bottom of the apparatus main unit 110 (main-unit sheet feed section 3). The sheet feed device 140 includes a pickup roller 141 and a sheet feed roller pair 142, and feeds sheets P stored in a sheet cassette 143 to the apparatus main unit 110 (sheet transport passage CP).

The post-processing device 150 is attached to a side of the apparatus main unit 110. The post-processing device 150 receives printed sheets P from the apparatus main unit 110, and subjects them to post-processing. For example, the post-processing device 150 includes a punch unit 151, a stapler unit 152, and a booklet unit 153. The post-processing device 150 subjects sheets P to post-processing such as punching, stapling, and booklet formation (folding of sheets P).

### <Hardware Configuration of a Multifunction Peripheral>

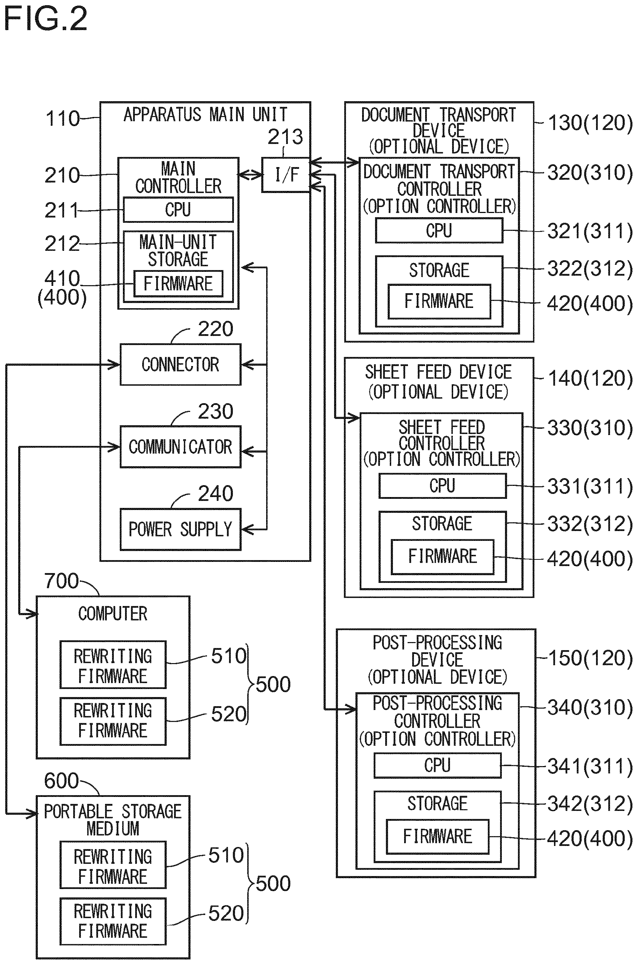

As shown in Fig. 2, the multifunction peripheral 100 (apparatus main unit 110) is provided with a main controller 210. The main controller 210 includes a CPU 211 and a main-unit storage 212. In the main-unit storage 212, there is stored firmware 400 (hereinafter referred to as main-unit firmware 410) for overall control of the multifunction peripheral 100. Based on the main-unit firmware 410, the main controller 210 controls the entire multifunction peripheral 100.

To the main controller 210, an I/F (interface) 213 is connected. The I/F 213 is so connected that, when an optional device 120 is attached to the multifunction peripheral 100, the I/F 213 can communicate with the optional device 120 attached to the multifunction peripheral 100. When communication with the optional device 120 becomes possible via the I/F 213, the main controller 210 recognizes that the optional device 120 is attached.

The multifunction peripheral 100 (apparatus main unit 110) is provided with a connector 220, a communicator 230, and a power supply 240. The connector 220, the communicator 230, and the power supply 240 are each connected to the main controller 210.

The connector 220 is an interface for connection with a portable storage medium 600 such as a USB memory. For example, on the portable storage medium 600, there are stored various programs and various kinds of data. When the portable storage medium 600 is connected to the connector 220, the main controller 210 acquires programs and data stored in the portable storage medium 600. The main controller 210 can also transmit image data to the portable storage medium 600.

The communicator 230 is communicably connected to an external computer 700 (such as a server or a user terminal). According to instructions from the main controller 210, the communicator 230 receives image data from the computer 700, or transmits image data to the computer 700.

The power supply 240 is connected to a commercial power supply, and generates a voltage necessary to operate the multifunction peripheral 100. According to instructions from the main controller 210, the power supply 240 supplies electric power to different parts in the multifunction peripheral 100 (including an optional device 120).

When an optional device 120 is attached to the multifunction peripheral 100, the main controller 210 makes the optional device 120 operate properly. The optional device 120 then operates on the basis of corresponding firmware 400. In the following description, the firmware 400 for an optional device 120 is referred to as option firmware 420.

Specifically, the document transport device 130 as an optional device 120 is provided with a document transport controller 320 including a CPU 321 and a storage 322. In the storage 322, there is stored option firmware 420 for controlling the transport operation by the document transport device 130. On the basis of the option firmware 420 stored in the storage 322, the document transport controller 320 controls the transport operation by the document transport device 130.

The sheet feed device 140 as an optional device 120 is provided with a sheet feed controller 330 including a CPU 331 and a storage 332. In the storage 332, there is stored option firmware 420 for controlling the sheet feed operation by the sheet feed device 140. On the basis of the option firmware 420 stored in the storage 332, the sheet feed controller 330 controls the sheet feed operation by the sheet feed device 140.

The post-processing device 150 as an optional device 120 is provided with a post-processing controller 340 including a CPU 341 and a storage 342. In the storage 342, there is stored option firmware 420 for controlling the post-processing operation by the post-processing device 150. Based on the option firmware 420 stored in the storage 342, the post-processing controller 340 controls the post-processing operation by the post-processing device 150.

In the above description, for convenience' sake, the option firmware 420 for different optional devices 120 is identified by a common reference sign; in practice, different pieces of option firmware 420 are provided for different optional devices 120. In the following description, too, the option firmware 420 for different optional devices 120 will be referred to by a common reference sign. In the following description, the document transport controller 320, the sheet feed controller 330, or the post-processing controller 340 is collectively referred to as an option controller 310. Likewise, the CPU 321, 331, or 341 is collectively referred to as a CPU 311, and the storage 322, 332, or 342 is collectively referred to as a storage 312.

### <Rewriting of Firmware>

As shown in Fig. 2, in the main-unit storage 212, there is stored main-unit firmware 410 for overall control of the multifunction peripheral 100. On the other hand, in the storage 312 of an optional device 120, there is stored option firmware 420 for controlling the operation of the corresponding optional device 120.

When the main-unit firmware 410 or the option firmware 420 undergoes bug correction and the like, it is updated from an old version to a new version. On such occasions, rewriting firmware 500, that is, firmware for rewriting the main-unit firmware 410 or the option firmware 420 with the latest version, is released. Such rewriting firmware 500 can be rewriting firmware 510 corresponding to main-unit firmware 410 or rewriting firmware 520 corresponding to the option firmware 420.

Such rewriting firmware 500 is provided in a form stored on a portable storage medium 600 or on a computer 700 (such as a server). Fig. 2 shows an example where rewriting firmware 500 is stored both on the portable storage medium 600 and on the computer 700; in practice, rewriting firmware 500 may be stored either on the portable storage medium 600 or on the computer 700.

In a case where rewriting firmware 500 is stored on a portable storage medium 600, the portable storage medium 600 is connected directly to the connector 220 so that a rewriting process based on the rewriting firmware 500 (a process of downloading the rewriting firmware 500 and rewriting the existing firmware 400 with the latest version based on the rewriting firmware 500) can be performed. In this case, the portable storage medium 600 corresponds to an "external device" according to the present invention.

In a case where rewriting firmware 500 is stored in a computer 700, the communicator 230 is communicably connected to the computer 700 across a network so that a rewriting process based on the rewriting firmware 500 can be performed. In this case, the computer 700 corresponds to an "external device" according to the present invention, and the communicator 230 corresponds to a "connector" according to the present invention.

A rewriting process based on rewriting firmware 500 is performed by the main controller 210. Or the main controller 210 makes an option controller 310 perform it. In this configuration, the main controller 210 corresponds to an "updater" according to the present invention.

For example, in a case where a portable storage medium 600 that stores rewriting firmware 510 for the apparatus main unit 110 is connected directly to the connector 220, or in a case where a computer 700 that stores rewriting firmware 510 for the apparatus main unit 110 is connected to the communicator 230 across a network, when an operation to start a rewriting mode is accepted, the main controller 210 starts the rewriting mode. Then the main controller 210 performs a rewriting process based on the rewriting firmware 510 for the apparatus main unit 110. Specifically, the main controller 210 downloads the rewriting firmware 510 for the apparatus main unit 110, and rewrites the existing main-unit firmware 410 with the latest version.

Here, there are cases where, along with rewriting firmware 510 for the apparatus main unit 110, rewriting firmware 520 for rewriting the option firmware 420 that is already stored in an optional device 120 (hereinafter occasionally referred to as the existing firmware 420) with firmware corresponding to the version of the main-unit firmware 410 that has been rewritten is stored on a portable storage medium 600 or on a computer 700. In such a case, the main controller 210 downloads, together with the rewriting firmware 510 for the apparatus main unit 110, the rewriting firmware 520 for the optional device 120 and stores it in the main-unit storage 212. The rewriting firmware 510 and 520 each include, as well as the very firmware of the latest version, a program for making the main controller 210 perform the rewriting of firmware, etc. They may include, instead of the very firmware of the latest version, a correction program for correcting part of the firmware of an older version.

The main controller 210 then transmits the rewriting firmware 520 for the optional device 120 via the I/F 213 to the option controller 310, and makes the option controller 310 perform a rewriting process based on the rewriting firmware 520. Specifically, the option controller 310 receives from the main controller 210 the rewriting firmware 520 for the optional device 120 that is stored in the main-unit storage 212, and rewrites the existing firmware 420 of the optional device 120 with the latest version on the basis of the rewriting firmware 520. Thus, in the storage 312 of the optional device 120 is now stored the firmware 420 that has been rewritten with the latest version (hereinafter occasionally referred to as the rewritten firmware 420).

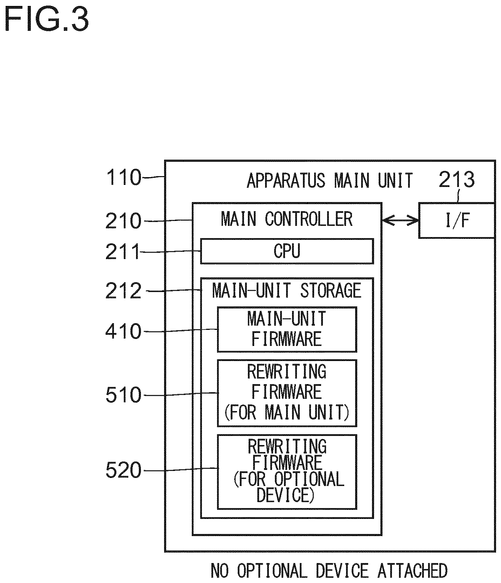

There may be cases where the multifunction peripheral 100 has no optional device 120 attached to it. Even then, just as in a case where the multifunction peripheral 100 has an optional device 120 attached to it, the main controller 210 downloads rewriting firmware 520 for an optional device 120 together with rewriting firmware 510 for the apparatus main unit 110 and stores it in the main-unit storage 212. Thus, as shown in Fig. 3, even though the multifunction peripheral 100 has no optional device 120 attached to it, the rewriting firmware 520 for the optional device 120 is stored in the main-unit storage 212.

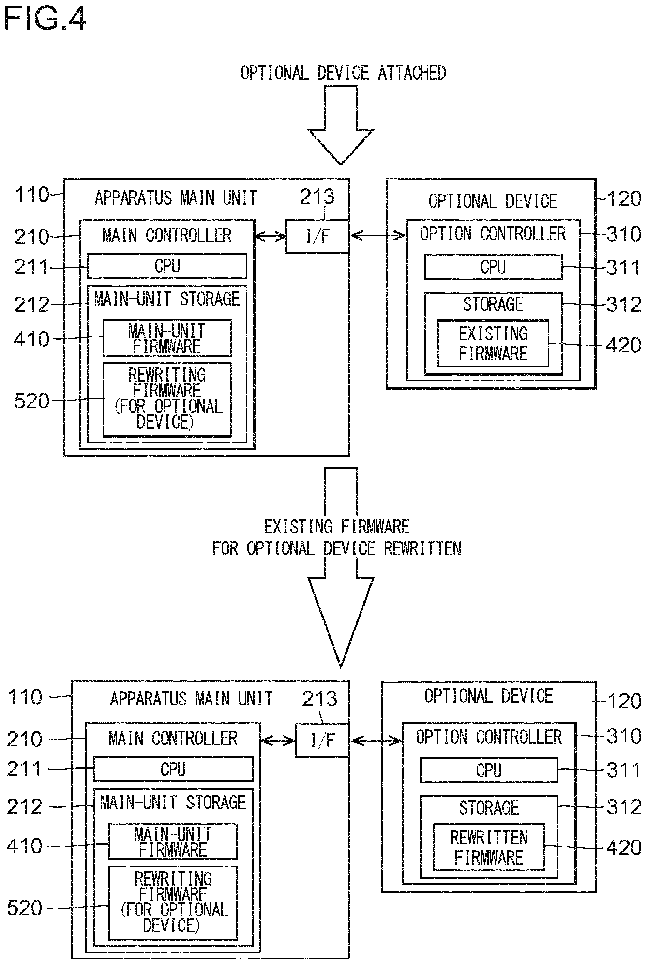

After the rewriting firmware 520 for the optional device 120 is stored in the main-unit storage 212 without the optional device 120 attached to the multifunction peripheral 100, when the optional device 120 is later attached to the multifunction peripheral 100, as shown in Fig. 4, the main controller 210 makes the option controller 310 perform a rewriting process based on the rewriting firmware 520 for the optional device 120 that is already stored in the body storage 212.

Specifically, on recognizing that the optional device 120 is attached to the multifunction peripheral 100, the main controller 210 transmits the rewriting firmware 520 for the optional device 120 that is stored in the main-unit storage 212 via the I/F 213 to the option controller 310. On receiving the rewriting firmware 520 for the optional device 120 from the main controller 210, the option controller 310 rewrites the existing firmware 420 of the optional device 120 with the latest version on the basis of the rewriting firmware 520. Thus, in the storage 312 of the optional device 120 is stored the rewritten firmware 420.

When an optional device 120 is attached to the multifunction peripheral 100, it can occur that the corresponding option firmware 420 has already been rewritten with firmware corresponding to the version of the main-unit firmware 410. For example, when an optional device 120 that can be attached to an earlier-shipped multifunction peripheral 100 is newly shipped, the option firmware 420 typically has been rewritten with firmware corresponding to the version of the main-unit firmware 410. In this case, when the optional device 120 is attached to the multifunction peripheral 100, no rewriting process needs to be performed for the option firmware 420. For example, in a case where an optional device 120 was detached from the multifunction peripheral 100 for some reason after the rewriting of option firmware 420 and the same optional device 120 was later attached back to the multifunction peripheral 100, the option firmware 420 already corresponds to the version of the main-unit firmware 410. Thus, no rewriting process needs to be performed for the option firmware 420.

Accordingly, when an optional device 120 is attached to the multifunction peripheral 100, the main controller 210 communicates with the option controller 310 via the I/F 213 to check the version of the option firmware 420. If the version of the option firmware 420 is not the one that corresponds to the main-unit firmware 410, the main controller 210 makes the option controller 310 perform a rewriting process for the option firmware 420.

Moreover, even after the completion of the rewriting process for the option firmware 420, the main controller 210 keeps the rewriting firmware 520 for the optional device 120 that was used in the rewriting process stored in the main-unit storage 212. For example, the main controller 210 keeps the previously acquired rewriting firmware 520 stored in the main-unit storage 212 until it acquires the rewriting firmware 520 of the latest version (until the rewriting firmware 520 for the optional device 120 is newly updated). When the main controller 210 acquires the rewriting firmware 520 of the latest version, it rewrites the rewriting firmware 520 stored in the main-unit storage 212 with the latest version.

It should be noted that a plurality of kinds of optional devices 120 are available, like a document transport device 130, a sheet feed device 140, and a post-processing device 150. Accordingly, different pieces of rewriting firmware 520 corresponding to different kinds of optional devices 120 can all be stored in the main-unit storage 212.

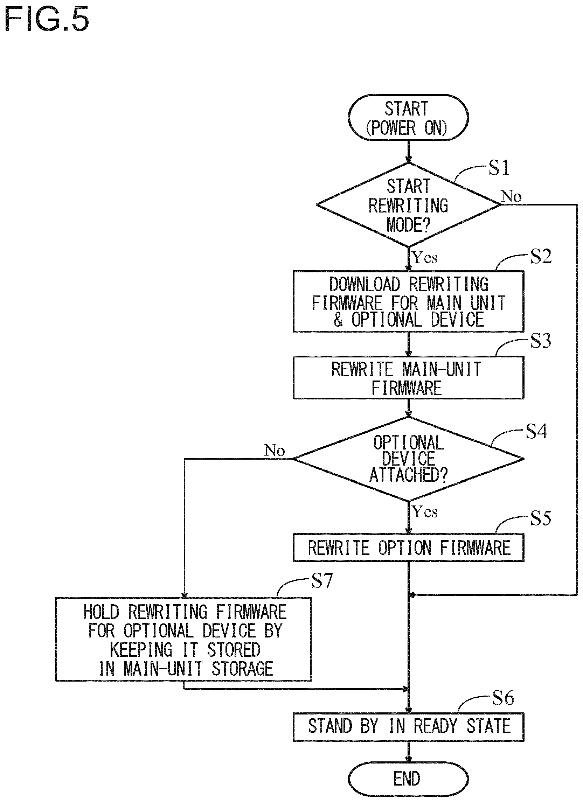

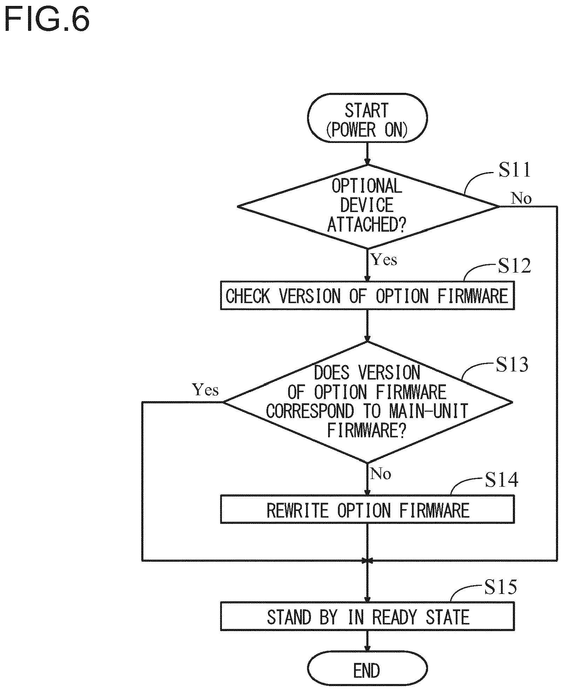

Now, with reference to Figs. 5 and 6, flows of control for a rewriting process performed in the multifunction peripheral 100 will be described.

First, with reference to a flow chart in Fig. 5, a description will be given of a flow of control for a rewriting process that is performed when rewriting firmware 500 (rewriting firmware 510 for the apparatus main unit 110 and rewriting firmware 520 for an optional device 120) is newly released. The flow in Fig. 5 starts when the power to the multifunction peripheral 100 is turned on and the multifunction peripheral 100 starts up.

At Step S1, the main controller 210 checks whether or not a condition for starting the rewriting mode has been fulfilled. Specifically, in a state where a portable storage medium 600 having rewriting firmware 500 stored on it is directly connected to the connector 220, or in a state where a computer 700 (such as a server) having rewriting firmware 500 stored in it is connected to the communicator 230 across a network, when the main controller 210 recognizes that an operation to start the rewriting mode has been done, it considers a condition for starting the rewriting mode to have been fulfilled, and starts the rewriting mode. In the rewriting mode, the flow proceeds to Step S2.

At Step S2, the main controller 210 downloads the rewriting firmware 500, and stores it in the main-unit storage 212. Here, irrespective of whether or not the optional device 120 is attached to the multifunction peripheral 100, the main controller 210 downloads both the rewriting firmware 510 for the apparatus main unit 110 and the rewriting firmware 520 for the optional device 120, and stores them in the main-unit storage 212. Then, at Step S3, the main controller 210 rewrites the main-unit firmware 410 on the basis of the rewriting firmware 510 for the apparatus main unit 110 that is stored in the main-unit storage 212.

Subsequently, at Step S4, the main controller 210 checks whether or not the optional device 120 is attached. If the optional device 120 is attached, the flow proceeds to Step S5. At Step S5, the main controller 210 makes the option controller 310 perform a rewriting process based on the rewriting firmware 520 for the optional device 120 that is stored in the main-unit storage 212. Specifically, the option controller 310 receives from the main controller 210 the rewriting firmware 520 for the optional device 120, and rewrites the option firmware 420 on the basis of the rewriting firmware 520.

The flow then proceeds to Step S6, where the main controller 210 makes the multifunction peripheral 100 stand by in a ready state (a state where it can perform jobs). Also if, at Step S1, the rewriting mode is not started, the flow proceeds to Step S6.

If, at Step S4, no optional device 120 is found to be attached, the flow proceeds to Step S7. At Step S7, the main controller 210 holds the rewriting firmware 520 for the optional device 120 by keeping it stored in the main-unit storage 212. The flow then proceeds to Step S6, where the main controller 210 makes the multifunction peripheral 100 stand by in a ready state.

Next, with reference to Fig. 6, a description will be given of a flow of control for a rewriting process that is performed when, with no optional device 120 attached to multifunction peripheral 100, rewriting firmware 520 for an optional device 120 is stored in the main-unit storage 212 and thereafter the optional device 120 is attached to the multifunction peripheral 100. The flow in Fig. 6 starts when the power to the multifunction peripheral 100 is turned on and the multifunction peripheral 100 starts up.

At Step S11, the main controller 210 checks whether or not an optional device 120 is attached to the multifunction peripheral 100. Specifically, the main controller 210 checks whether or not it can communicate with the optional device 120 via the I/F 213. If an optional device 120 is attached to the multifunction peripheral 100 (if communication is possible with the optional device 120 via the I/F 213), the flow proceeds to Step S12.

At Step S12, the main controller 210 checks the version of the option firmware 420. The version recognized here is stored, for example, in the main-unit storage 212. The flow then proceeds to Step S13.

At Step S13, the main controller 210 checks whether or not the version of the option firmware 420 corresponds to the main-unit firmware 410. If the version of the option firmware 420 does not correspond to the main-unit firmware 410, the flow proceeds to Step S14. At Step S14, the main controller 210 makes the option controller 310 perform a rewriting process based on the rewriting firmware 510 for the optional device 120 that is stored in the main-unit storage 212. Specifically, the option controller 310 receives from the main controller 210 the rewriting firmware 520 for the optional device 120, and rewrites the option firmware 420 on the basis of the rewriting firmware 520.

The flow then proceeds to Step S15, where the main controller 210 makes the multifunction peripheral 100 stand by in a ready state. Also if, at Step S13, the version of the option firmware 420 is found to correspond to the main-unit firmware 410, the flow proceeds to Step S15. That is, in that case, no rewriting process for the option firmware 420 is performed. Also if, at Step S11, no optional device 120 is found to be attached to the multifunction peripheral 100, the flow proceeds to Step S15.

According to the embodiment, as described above, a multifunction peripheral 100 (image forming apparatus) includes: a main-unit storage 212 for storing main-unit firmware 410 for overall control of the multifunction peripheral 100, the main-unit storage 212 also storing, even when the optional device 120 is not attached to the multifunction peripheral 100, rewriting firmware 520 for rewriting option firmware 420 with firmware corresponding to the version of the main-unit firmware 410; an I/F 213 for communication with the optional device 120 when the optional device 120 is attached to the multifunction peripheral 100; and a main controller 210 (updater) for rewriting the main-unit firmware 410 with the latest-version firmware to store the rewritten main-unit firmware 410 in the main-unit storage 212, the main controller 210, on an occasion of rewriting the main-unit firmware 410, storing the rewriting firmware 520 for the optional device 120 in the main-unit storage 212, transmitting the rewriting firmware 520 for the optional device 120 that is stored in the main-unit storage 212 via the I/F 213 to the optional device 120 attached to the multifunction peripheral 100, and making the optional device 120 perform a rewriting process to rewrite the option firmware 420 with firmware corresponding to the version of the main-unit firmware 410.

With a configuration according to the embodiment, when both main-unit firmware 410 and option firmware 420 need to be rewritten, even if no optional device 120 is attached to the multifunction peripheral 100, rewriting firmware 520 for the optional device 120 can be downloaded and stored in the main-unit storage 212. Thus, when an optional device 120 is attached to the multifunction peripheral 100 later, if the version of the option firmware 420 does not correspond to the main-unit firmware 410, the option firmware 420 can be rewritten on the basis of the rewriting firmware 520 for the optional device 120 that is already stored in the main-unit storage 212. Thus, an operator who attaches the optional device 120 does not need to establish an environment for the downloading of the rewriting firmware 520 for the optional device 120. This helps reduce the work that the operator has to do when attaching an optional device 120.

Moreover, for example, when a new-model multifunction peripheral 100 that causes an earlier-shipped optional device 120 to be attached to it is shipped, unless the option firmware 420 of the earlier-shipped optional device 120 is rewritten, the earlier-shipped optional device 120 may not operate properly. In such a case, with a configuration according to the present invention, when the new-model multifunction peripheral 100 is shipped, rewriting firmware 520 with which to rewrite the option firmware 420 of the earlier-shipped optional device 120 can be stored in the main-unit storage 212 of the new-model multifunction peripheral 100. This helps reduce the work that has to be done when the earlier-shipped optional device 120 is attached to the new-model multifunction peripheral 100.

According to the embodiment, preferably, as described above, the main controller 210 communicates with the optional device 120 attached to the multifunction peripheral 100 via the I/F 213 to check the version of the option firmware 420, and if the version of the option firmware 420 does not correspond to the main-unit firmware 410, the main controller 210 makes the optional device 120 perform a rewriting process for the option firmware 420. In other words, if the version of the option firmware 420 corresponds to the main-unit firmware 410 (if no rewriting process is needed for the option firmware 420), the main controller 210 does not make the option controller 310 perform a rewriting process for the option firmware 420. This helps prevent a rewriting process from being performed unnecessarily for the option firmware 420.

In this configuration, preferably, when the main controller 210 can communicate with the optional device 120 via the I/F 213, the main controller 210 recognizes that the optional device 120 is attached to the multifunction peripheral 100, and on recognizing that the optional device 120 is attached to the multifunction peripheral 100, the main controller 210 checks the version of the option firmware 420. Thus, when the optional device 120 is attached to the multifunction peripheral 100, if the version of the option firmware 420 does not correspond to the main-unit firmware 410, a rewriting process for the option firmware 420 is performed promptly. This helps prevent the multifunction peripheral 100 from being used with the version of the option firmware 420 not corresponding to the main-unit firmware 410. That is, it is possible to prevent malfunction due to the version of the option firmware 420 not corresponding to the main-unit firmware 410.

According to the embodiment, preferably, as described above, even when no optional device 120 is attached to the multifunction peripheral 100, the main controller 210 downloads the rewriting firmware 520 for the optional device 120 from a portable storage medium 600 (external device) connected to a connector 220, or from a computer 700 (external device), such as a server, connected to a communicator 230 (connector), and the main-unit storage 212 stores the downloaded rewriting firmware 520 for the optional device 120. Thus, even when no optional device 120 is attached to the multifunction peripheral 100, it is possible to easily download the rewriting firmware 520 for the optional device 120 from the portable storage medium 600 or the computer 700 and store it in the body storage 212.

According to the embodiment, preferably, as described above, even after the completion of the rewriting process for the option firmware 420, the main-unit storage 212 keeps storing the rewriting firmware 520 for the optional device 120 that was used in the rewriting process until the option firmware 420 for the optional device 120 is newly updated. Thus, for example, when an optional device 120 was detached from the multifunction peripheral 100 for some reason after the rewriting of option firmware 420 and a replacement optional device 120 was later attached to the multifunction peripheral 100, if the option firmware 420 for the replacement optional device 120 needs to be rewritten, the option firmware 420 can be rewritten on the basis of the rewriting firmware 520 for the optional device 120 that is already stored in the body storage 212. This helps alleviate an operator's trouble..

It should be understood that the embodiments discloses herein are in every aspect illustrative and not restrictive. The scope of the present invention is defined not by the description of embodiments given above but by the appended claims.

## Claims

1. An image forming apparatus (100) to which an optional device (120) can be attached, the image forming apparatus (100) comprising:
a main-unit storage (212) for storing main-unit firmware for overall control of the image forming apparatus,
an interface (213) for communication with the optional device (120) when the optional device (120) is attached to the image forming apparatus (100); and
an updater (210) for rewriting the main-unit firmware (410) with latest-version firmware to store the rewritten main-unit firmware (410) in the main-unit storage (212),
the updater (210), on an occasion of rewriting the main-unit firmware (410),
storing the rewriting firmware (520) in the main-unit storage (212),
transmitting the rewriting firmware (520) stored in the main-unit storage (212) via the interface (213) to the optional device (120) attached to the image forming apparatus (100), and
making the optional device (120) perform a rewriting process to rewrite the option firmware (420) with firmware corresponding to the version of the main-unit firmware (410), **characterized in that**
the optional device (120) is a post-processing device (150), and
the main-unit storage (212) also stores, even when the optional device (120) is not attached to the image forming apparatus (100), rewriting firmware (520) for rewriting, with firmware corresponding to a version of the main-unit firmware (410), option firmware (420) which is firmware for operating the optional device (120) and which is stored in the optional device (120).

2. The image forming apparatus (100) of claim 1, wherein
the updater (210) communicates with the optional device (120) attached to the image forming apparatus via the interface (213) to check a version of the option firmware (420), and if the version of the option firmware (420) does not correspond to the main-unit firmware (410), the updater (210) makes the optional device (120) perform the rewriting process.

3. The image forming apparatus (100) of claim 2, wherein
when the updater (210) can communicate with the optional device (120) via the interface (213), the updater (210) recognizes that the optional device (120) is attached to the image forming apparatus (100), and on recognizing that the optional device (120) is attached to the image forming apparatus (100), the updater (210) checks the version of the option firmware.

4. The image forming apparatus (100) of any one of claims 1 to 3, further comprising:
a connector (220, 230) connectible to an external device (600, 700) that stores the rewriting firmware (520), wherein
even when the optional device (120) is not attached to the image forming apparatus (100), the updater (210) downloads the rewriting firmware (520) from the external device (600, 700) connected to the connector (220, 230), and the main-unit storage (212) stores the downloaded rewriting firmware (520).

5. The image forming apparatus (100) of any one of claims 1 to 4, wherein
even after completion of the rewriting process, the main-unit storage (212) keeps storing the rewriting firmware (520) used in the rewriting process until the option firmware (420) is newly updated.

6. The image forming apparatus (100) of any one of claims 1 to 5, wherein
when a plurality of kinds of optional devices (120) can be attached to the image forming apparatus (100), the main-unit storage (212) stores a plurality of pieces of firmware (520) corresponding to the plurality of kinds of optional devices (120) respectively.

## Patentansprüche

1. Bilderzeugungsvorrichtung (100), an der eine optionale Einrichtung (120) anbringbar ist, wobei die Bilderzeugungsvorrichtung (100) umfasst:
einen Haupteinheitsspeicher (212) zum Speichern von Haupteinheitsfirmware zur globalen Steuerung der Bilderzeugungsvorrich tung,
eine Schnittstelle (213) zur Kommunikation mit der optionalen Einrichtung (120), wenn die optionale Einrichtung (120) an die Bilderzeugungsvorrichtung (100) angeschlossen ist; und
eine Aktualisierungsvorrichtung (210) zum Umschreiben der Haupteinheitsfirmware (410) mit der neuesten Version der Firmware, um die umgeschriebene Haupteinheitsfirmware (410) in dem Haupteinheitsspeicher (212) zu speichern,
wobei die Aktualisierungsvorrichtung (210) anlässlich des Umschreibens der Haupteinheitsfirmware (410)
die Umschreibungsfirmware (520) in dem Haupteinheitsspeicher (212) speichert,
die in dem Haupteinheitsspeicher (212) gespeicherte Umschreibungsfirmware (520) über die Schnittstelle (213) zu der an der Bilderzeugungsvorrichtung (100) angebrachten optionalen Einrichtung (120) überträgt, und
veranlasst, dass die optionale Einrichtung (120) einen Umschreibeprozess durchführt, um die Optionsfirmware (420) durch eine Firmware umzuschreiben, die der Version der Haupteinheitsfirmware (410) entspricht,
**dadurch gekennzeichnet, dass** die optionale Einrichtung (120) eine Nachbearbeitungseinrichtung (150) ist, und
der Haupteinheitsspeicher (212) auch dann, wenn die optionale Einrichtung (120) nicht an die Bilderzeugungsvorrichtung (100) angeschlossen ist, eine Umschreibungsfirmware (520) speichert, um eine Optionsfirmware (420), die eine Firmware zum Betreiben der optionalen Einrichtung (120) ist und die in der optionalen Einrichtung (120) gespeichert ist, mit einer Firmware umzuschreiben, die einer Version der Haupteinheitsfirmware (410) entspricht.

2. Bilderzeugungsvorrichtung (100) nach Anspruch 1, bei der die Aktualisierungsvorrichtung (210) mit der an die Bilderzeugungsvorrichtung angeschlossenen optionalen Einrichtung (120) über die Schnittstelle (213) kommuniziert, um eine Version der Optionsfirmware (420) zu prüfen, und wenn die Version der Optionsfirmware (420) nicht der Firmware (410) der Haupteinheit entspricht, die optionale Einrichtung (120) veranlasst, den Umschreibvorgang durchzuführen.

3. Bilderzeugungsvorrichtung (100) nach Anspruch 2, bei der
wenn die Aktualisierungsvorrichtung (210) mit der optionalen Vorrichtung (120) über die Schnittstelle (213) kommunizieren kann, die Aktualisierungsvorrichtung (210) erkennt, dass die optionale Einrichtung (120) an der Bilderzeugungsvorrichtung (100) angebracht ist, und die Aktualisierungsvorrichtung (210) beim Erkennen, dass die optionale Einrichtung (120) an der Bilderzeugungsvorrichtung (100) angebracht ist, die Version der Optionsfirmware überprüft.

4. Bilderzeugungsvorrichtung (100) nach einem der Ansprüche 1 bis 3, die ferner umfasst
einen Verbinder (220, 230), der mit einer externen Einrichtung (600, 700) verbindbar ist, die die Umschreibungsfirmware (520) speichert, wobei
selbst wenn die optionale Einrichtung (120) nicht an der Bilderzeugungsvorrichtung (100) angebracht ist, die Aktualisierungsvorrichtung (210) die Umschreibungsfirmware (520) von der externen Vorrichtung (600, 700) herunterlädt, die mit dem Verbinder (220, 230) verbunden ist, und der Haupteinheitsspeicher (212) die heruntergeladene Umschreibungsfirmware (520) speichert.

5. Bilderzeugungsvorrichtung (100) nach einem der Ansprüche 1 bis 4, bei der
selbst nach Beendigung des Umschreibvorgangs der Haupteinheitsspeicher (212) die im Umschreibvorgang verwendete Umschreibfirmware (520) weiterhin speichert, bis die Optionsfirmware (420) aufs Neue aktualisiert wird.

6. Bilderzeugungsvorrichtung (100) nach einem der Ansprüche 1 bis 5, bei der
wenn eine Mehrzahl von Arten von optionalen Einrichtungen (120) an die Bilderzeugungsvorrichtung (100) angeschlossen werden kann, der Haupteinheitsspeicher (212) eine Mehrzahl von Firmware-Teilen (520) speichert, die jeweils der Mehrzahl von Arten von optionalen Einrichtungen (120) entsprechen.

## Revendications

1. Appareil de formation d'images (100) auquel un dispositif optionnel (120) peut être fixé, l'appareil de formation d'images (100) comprenant :
une mémoire d'unité principale (212) pour stocker le micrologiciel d'unité principale pour le contrôle global de l'appareil de formation d'images,
une interface (213) pour la communication avec le dispositif optionnel (120) lorsque le dispositif optionnel (120) est relié à l'appareil de formation d'images (100) ; et
un dispositif de mise à jour (210) pour réécrire le micrologiciel d'unité principale (410) par un micrologiciel de dernière version, pour stocker le micrologiciel d'unité principale (410) réécrit dans la mémoire d'unité principale (212),
le dispositif de mise à jour (210), à l'occasion d'une réécriture du micrologiciel d'unité principale (410),
stockant le micrologiciel de réécriture (520) dans la mémoire d'unité principale (212),
transmettant le micrologiciel de réécriture (520) stocké dans la mémoire d'unité principale (212) via l'interface (213) au dispositif optionnel (120) relié à l'appareil de formation d'images (100), et
faisant en sorte que le dispositif optionnel (120) effectue un processus de réécriture pour réécrire le micrologiciel optionnel (420) par un micrologiciel correspondant à la version du micrologiciel d'unité principale (410),
**caractérisé en ce que** le dispositif optionnel (120) est un dispositif de post-traitement (150), et
la mémoire (212) d'unité principale stocke également, même lorsque le dispositif optionnel (120) n'est pas relié à l'appareil de formation d'images (100), un micrologiciel de réécriture (520) pour la réécriture, par un micrologiciel correspondant à une version du micrologiciel d'unité principale (410), d'un micrologiciel optionnel (420) qui est un micrologiciel pour le fonctionnement du dispositif optionnel (120) et qui est stocké dans le dispositif optionnel (120).

2. L'appareil de formation d'images (100) de la revendication 1, dans lequel le dispositif de mise à jour (210) communique avec le dispositif optionnel (120) relié à l'appareil de formation d'images via l'interface (213) pour vérifier une version du micrologiciel optionnel (420), et si la version du micrologiciel optionnel (420) ne correspond pas au micrologiciel d'unité principale (410), le dispositif de mise à jour (210) fait en sorte que le dispositif optionnel (120) effectue le processus de réécriture.

3. L'appareil de formation d'images (100) selon la revendication 2, dans lequel
lorsque le dispositif de mise à jour (210) peut communiquer avec le dispositif optionnel (120) via l'interface (213), le dispositif de mise à jour (210) reconnaît que le dispositif optionnel (120) est connecté à l'appareil de formation d'images (100), et lorsqu'il reconnaît que le dispositif optionnel (120) est connecté à l'appareil de formation d'images (100), le dispositif de mise à jour (210) vérifie la version du micrologiciel optionnel.

4. L'appareil de formation d'images (100) selon l'une quelconque des revendications 1 à 3, comprenant en outre :
un connecteur (220, 230) pouvant être connecté à un dispositif externe (600, 700) qui stocke le micrologiciel de réécriture (520), dans lequel
même lorsque le dispositif optionnel (120) n'est pas connecté à l'appareil de formation d'images (100), le dispositif de mise à jour (210) télécharge le micrologiciel de réécriture (520) à partir du dispositif externe (600, 700) connecté au connecteur (220, 230), et la mémoire de l'unité principale (212) stocke le micrologiciel de réécriture téléchargé (520).

5. L'appareil de formation d'images (100) de l'une quelconque des revendications 1 à 4, dans lequel
même après l'achèvement du processus de réécriture, la mémoire de l'unité principale (212) conserve le micrologiciel de réécriture (520) utilisé dans le processus de réécriture jusqu'à ce que le micrologiciel optionnel (420) soit nouvellement mis à jour.

6. L'appareil de formation d'images (100) selon l'une quelconque des revendications 1 à 5, dans lequel
lorsqu'une pluralité de types de dispositifs optionnels (120) peuvent être attachés à l'appareil de formation d'images (100), la mémoire de l'unité principale (212) stocke une pluralité de pièces de micrologiciels (520) qui correspondent respectivement à la pluralité de types de dispositifs optionnels (120).
